# EUROPÄISCHE PATENTSCHRIFT

(11) **EP 1 648 712 B1**
(45) Veröffentlichungstag und Bekanntmachung des Hinweises auf die Patenterteilung: **14.02.2007**
(21) Anmeldenummer: 04738117.3
(22) Anmeldetag: 29.07.2004
(51) Int. Cl.: B42D 5/02, B42D 15/10

(54) **SPENDEMATERIAL ZUR HERSTELLUNG VON GEGENSTAENDEN MIT AUFGEKLEBTEN KARTEN, HERSTELLUNGSVERFAHREN DAFUER UND VERWENDUNG DAVON**
DISPENSER MATERIAL FOR PRODUCTION OF OBJECTS WITH BONDED CARDS, PRODUCTION METHOD AND USE THEREOF
MATERIAU DE DISTRIBUTION SERVANT A PRODUIRE DES OBJETS COMPORTANT DES CARTES COLLEES, PROCEDE DE PRODUCTION ET UTILISATION DUDIT MATERIAU DE DISTRIBUTION

(30) Priorität: 29.07.2003 CH 131603
(43) Veröffentlichungstag der Anmeldung: 26.04.2006
(73) Patentinhaber: Fofitec AG, 5605 Dottikon (CH)
(72) Erfinder: FISCHER, Jules, CH-8966 Oberwil-Lieli (CH)
(74) Vertreter: Lauer, Joachim
(86) Internationale Anmeldenummer: PCT/CH2004/000477
(87) Internationale Veröffentlichungsnummer: WO 2005/009750

(56) Entgegenhaltungen:
- EP-A- 0 553 508
- EP-A- 1 060 994
- EP-A- 1 295 733
- WO-A-97/15458
- WO-A-03/020532
- US-A- 4 318 554
- US-A- 5 916 665

## Beschreibung

### TECHNISCHES GEBIET

Die vorliegende Erfindung betrifft ein Spendematerial zur Herstellung von Gegenständen mit aufgeklebten Karten, welches Spendematerial eine Trennmaterialbahn und darauf ablösbar aufgeklebt und trennmaterialseitig mit einer Kleberschicht versehen solche Karten aufweist und wobei die Kleberschicht der Karten mit einer lokalen Modifikation versehen ist.

Die Erfindung betrifft auch ein Verfahren zur Herstellung eines solchen Spendematerials mit einer Trennmaterialbahn und darauf ablösbar aufgeklebten, trennmaterialseitig mit einer Kleberschicht versehenen Karten, wobei die Kleberschicht der Karten mit einer lokalen Modifikation versehen ist.

Die Erfindung betrifft weiter eine Verwendung eines solchen Spendematerials in Verbindung mit einem Etikettenspender zur Herstellung von Gegenständen mit aufgeklebter Karte.

### STAND DER TECHNIK

Aus der WO 00/71436 sind Papierformulare mit integrierter Faltkarte (fold-over card intermediate) bekannt. Zur Herstellung der integrierten Faltkarten werden Aufkleber (patches) mit einem wiederverwendbaren, ablösbaren Kleber auf die Papierformulare aufgeklebt. In dem Formularmaterial wird sodann in dem von den Aufklebern überdeckten Bereich durch eine umlaufende Stanzung jeweils mindestens ein Stanzling freigestanzt. Wegen des verwendeten Klebers sind die Aufkleber von den Papierformularen ablösbar. Beim Ablösen geht der Kleber sowie der zuvor freigestanzte mindestens eine Stanzling mit den Aufklebern mit. Nach ihrer Ablösung kann aus den Aufklebern mit den anhängenden Stanzlingen durch Zusammenfalten und miteinander Verkleben von zwei ihrer Teile entlang einer Perforation als Falzhilfe mittels des genannten Klebers eine äusserlich nicht klebrige Karte hergestellt werden. Hierbei kommt der mindestens eine Stanzling zwischen den beiden Teilen zu liegen. Zum Herstellungsverfahren führt die WO 00/71436 aus, dass die Aufkleber mit dem Kleber auf ihrer Unterseite sowie der Perforation bereits versehen und bereits auch schon auf die gewünschte Breite zugeschnitten von einer Rolle abgezogen, abgelängt und auf die Papierformulare aufgebracht werden können. Als Alternative wird erwähnt, dass die Aufkleber auch in Form vor-ausgestanzter Etiketten verwendet werden könnten.

Es sind auch schon Papierformulare mit Faltkarten und zusätzlich zwischen den Faltkarten und den Papierformularen eingeklebten, flächigen Substraten bekannt, wobei es sich bei den Substraten unter anderem um berührungslos detektierbare, sogenannte Transponder handelt. Beim Ablösen der Faltkarten gehen die Substrate bzw. Transponder mit diesen mit und kommen, wie die vorgenannten Stanzlinge, zwischen den beiden miteinander verklebten Teilen der Faltkarten zu liegen.

Anders als bei den vorgenannten Stanzlingen, die aus dem Formularmaterial ausgestanzt werden und insofern von vornherein vorhanden sind, handelt es sich bei den Substraten um zusätzliche, im Fall der Transponder sogar um von Drittherstellern zu beziehende Teile, die besonders zugeführt und gehandhabt werden müssen. Ihre Plazierung zwischen den Faltkarten und dem Formularmaterial bereitet denn auch gewisse Schwierigkeiten. Insbesondere lassen sich die Substrate nicht einfach vor den Faltkarten auf das Formularmaterial aufkleben. Zwar sind z.B. Transponder im Handel erhältlich, welche mit einer Haftkleberschicht versehen und wie Selbstklebe-Etiketten aufgeklebt werden können; um jedoch sicherzustellen, dass sich diese Transponder zusammen mit den Faltkarten beim Ablösen der Faltkarten vom Formularmaterial ablösen und mit den Faltkarten mitgehen, müsste der Haftwert der Transponder gegenüber dem Formularmaterial geringer eingestellt sein als der Haftwert, den der Kleber auf den Faltkarten mit ihnen eingeht. Transponder mit einem derart speziell eingestellten Kleber zum Formularmaterial hin, sind kommerziell nicht erhältlich. Selbst bei einer Spezialanfertigung derartiger Transponder wäre die richtige Einstellung des Klebers eine heikle Angelegenheit.

Ein Spendematerial der eingangs genannten Art ist aus WO 03/020532 A bekannt, wobei die lokale Modifikation der Kleberschicht durch Silikonstreifen auf einem Trägermaterial erzeugt ist (Entsprechend dem Oberbegriff des Anspruchs 1).

Aus WO 9715458 A ist ein Spendemateial zur Herstellung von Formularen mit integrierten Karten bekannt, wobei das Spendematerial eine Trägerschicht und eine Kleberschicht umfasst. Im Formular ist die Haftung zwischen den Karten und der Trägerschicht lokal reduziert durch einen Silikonstreifen auf der Karte oder durch teilweises Welassen bzw. Unterbrechen der Kleberschicht.

Aus EP-A1-1 060 994 ist die Verwendung eines Spendematerials in Verbindung mit einem Etikettenspender bekannt.

### DARSTELLUNG DER ERFINDUNG

Nach dem Vorstehenden gestaltet sich das Hinzufügen der Substrate also relativ schwierig und aufwendig, so dass es sich in der Praxis auch nicht recht durchsetzen konnte.

Durch die Erfindung, wie sie in den Patentansprüchen gekennzeichnet ist, wird nunmehr ein anderer Weg vorgeschlagen, bei welchem Substrate, die einen berührungslos detektierbaren Tag umfassen , bereits vorgängig in ein Spendematerial eingebracht und unter Verwendung desselben zusammen mit den Karten in sehr einfacher und rationeller Weise auf die Gegenstände aufgebracht werden. Die Substrate brauchen hierbei nicht klebend zu sein und sind dies bevorzugt auch nicht. Die Erfindung zeigt auch auf, wie ein solches Spendematerial rationell hergestellt werden kann. Mit besonderem Vorteil sind die Substrate geeignet, eine Information zu vermitteln.

In allgemeinster Form ist demnach Gegenstand der Erfindung ein Spendematerial zur Herstellung von Gegenständen mit aufgeklebten Karten, welches Spendematerial eine Trennmaterialbahn und darauf ablösbar aufgeklebt und trennmaterialseitig mit einer Kleberschicht versehen solche Karten aufweist, wobei die Kleberschicht der Karten mit einer lokalen Modifikation versehen ist, wobei die Modifikation der Kleberschicht der Karten durch mindestens ein auf die Kleberschicht lokal aufgebrachtes Substrat gebildet wird und wobei das Substrat einen berührungslos detektierbaren Tag umfasst..

Der Tag kann magnetisch und/oder elektrisch/elektronisch berührungslos detektierbar sein. Tags, die mit einem Chip und insofern mit einer gewissen Intellizenz versehen sind, bezeichnet man auch als Transponder.
Gemäss einer bevorzugten Ausführungsform der Erfindung ist die Kleberschicht der Karten nicht-permanent klebend ausgebildet. Die Karten können dadurch nach Ablösung von der Trennmaterialbahn an einem anderen Gegenstand, insbesondere jedoch an einer Papieroberfläche wiederablösbar angeklebt werden. Dies erlaubt es, die Karten als Faltkarten wie bereits beschrieben zu verwenden, wozu sie mit Vorteil mit einer Falt- bzw. Falzhilfe versehen werden.

Sofern die Karten als Faltkarten vorgesehen und mit einem Transponder versehen sind, können sie zum Schutz des Transponderchips bereits auch schon mit einer Druckentlastungszone für den Chip versehen sein.

In einer anderen Ausführungsform der Erfindung ist die Kleberschicht der Karten permanent klebend ausgebildet. Um es auch hierbei zu ermöglichen, die Karten an einem Gegenstand wie z.B. an einem Papierbogen wiederablösbar anzukleben, ist zwischen der Kleberschicht der Karten und der Trennmaterialbahn jeweils ein Trennmaterialstück mit einer Trennschicht zur Kleberschicht der Karten hin und einer weiteren Kleberschicht zur Trennmaterialbahn hin vorhanden. Der Trennwert zwischen der weiteren Kleberschicht und der Trennmaterialbahn ist hierbei schwächer eingestellt als der Trennwert zwischen der Kleberschicht der Karten und der Trennschicht des Trennmaterialstücks.

Gegenstand der Erfindung ist auch ein Verfahren zur Herstellung eines Spendematerials wie vorbeschrieben mit einer Trennmaterialbahn und darauf ablösbar aufgeklebten, trennmaterialseitig mit einer Kleberschicht versehenen Karten, wobei die Kleberschicht der Karten mit einer lokalen Modifikation versehen ist. Das erfindungsgemässe Verfahren ist dadurch gekennzeichnet, dass in einem Durchlauf eine Kartenmaterialbahn, die eine Kartenmaterialschicht und eine freiliegende Kleberschicht umfasst, mit der Trennmaterialbahn zu einer Zwischenbahn laminiert wird, dass die lokale Modifikation der Kleberschicht der Karten durch eine lokale Modifikation der freiliegenden Kleberschicht der Kartenmaterialbahn vor dem Laminieren mit der Trennmaterialbahn durch lokales Aufbringen von berührungslos detektierbaren Tags umfassenden Substraten ausgeführt wird, und dass die Karten nach dem Laminieren durch Stanzen der Zwischenbahn in der Kartenmaterialbahn erzeugt werden.

Die Substrate werden bevorzugt durch Ablängen einer nicht klebenden Substratbahn vereinzelt und z.B. mittels eines Vakuumzylinders auf die freiliegende Kleberschicht der Kartenmaterialbahn aufgebracht.

Sofern ein Spendematerial hergestellt werden soll, bei dem die Kleberschicht der Kartenmaterialbahn nicht-permanent klebend ausgebildet ist, kann die Kartenmaterialbahn einfach von einer Rolle abgewickelt werden, auf welcher sie ohne zusätzliche Abdeckung der Kleberschicht auf sich selbst aufgerollt ist.

Sofern ein Spendematerial hergestellt werden soll, bei welchem die Kleberschicht der Kartenmaterialbahn permanent klebend ausgebildet ist und bei welchem zwischen der Kleberschicht der Karten und der Trennmaterialbahn jeweils ein Trennmaterialstück mit einer Trennschicht zur Kleberschicht der Karten hin und einer weiteren Kleberschicht zur Trennmaterialbahn hin vorhanden ist, kann dies gemäss einer weiteren Ausführungsform eines erfindungsgemässen Verfahrens besonders einfach durch Verwendung einer speziellen Trennmaterialbahn erfolgen. Diese spezielle Trennmaterialbahn besteht aus der bereits erwähnten Trennmaterialbahn, die auf ihrer der Kartenmaterialbahn zugewandten Seite mittels einer weiteren Kleberschicht mit einer weiteren Trennmaterialbahn laminiert ist. Die weitere Kleberschicht und die weitere Trennmaterialbahn gehen in die Zwischenbahn mit ein. Aus ihnen werden beim Stanzen der Zwischenbahn zur Erzeugung der Karten die Trennmaterialstücke mit ausgestanzt.

In allen Auführungsformen des erfindungsmässen Verfahrens wird bevorzugt auch ein beim Stanzen der Zwischenbahn entstehendes Stanzgitter unmittelbar abgezogen.

Sofern ein Spendematerial mit Substraten hergestellt werden soll, die einen Transponder mit Chip aufweisen, kann beim Stanzen der Zwischenbahn in der Kartenmaterialschicht gleichzeitig jeweils mindestens eine Druckentlastungszone für den Chip mit erzeugt werden.

Zur Ausführung des Verfahrens in allen erwähnten Varianten geeignet ist z.B. eine sogenannte Web-Finishing-Anlage zur Verarbeitung von Endlosbahnen, wie sie im Stand der Technik bereits bekannt ist. Das erfindungsgemässe Verfahren erfordert jedoch insofern eine Umkehrung des im Web-Finishing sonst üblichen Vorgehens, als hier z.B. nichtklebende Substrate auf eine freiliegende vollflächige Kleberschicht einer laufenden Bahn aufgebracht werden müssen. Üblich ist z.B. das Aufspenden von Klebeetiketten auf eine nichtklebende Bahn. Ungewöhnlich bei dem erfindungsgemässen Verfahren ist zudem, dass der letztendliche Nutzen in Form der Karten, die ja zunächst Teil der Kartenmaterialbahn sind, im Laufe des Verfahrens auf die Trennmaterialbahn transferiert und von dieser übernommen wird.

Gegenstand der Erfindung ist schliesslich auch noch auch eine Verwendung eines Spendematerials wie vorbeschrieben in Verbindung mit einem Etikettenspender zur Herstellung von Gegenständen mit aufgeklebter Karte. Im Vergleich zu den Web-Finishing-Anlagen, wie sie zur Herstellung des erfindungsgemässen Mehrschichtmaterials eingesetzt werden können, sind Etitkettenspender recht kostengünstige Aggregate, die in vielen Betrieben, darunter auch einfachen Druckereien, heute standardmässig zur Verfügung stehen. Die Verarbeitung des erfindungsgemässen Mehrschichtmaterials ist damit in grosser Breite möglich, ohne dass es dazu eine spezielle und teure Ausrüstung braucht und ohne dass das zusätzliche Vorhandensein der Substrate auf dieser Verarbeitungsstufe überhaupt einen zusätzlichen Aufwand erfordern würde.

Das Material für die Karten bzw. die Kartenmaterialschicht der Kartenmaterialbahn kann Papier oder Kunststoff, jedoch auch ein mehrschichtiges Laminat aus Papier und/oder Kunststoff sein.

### KURZE ERLÄUTERUNG DER FIGUREN

Die Erfindung soll nachfolgend anhand von Ausführungsbeispielen im Zusammenhang mit der Zeichnung näher erläutert werden. Es zeigen jeweils in schematischer Darstellung:
- Fig. 1: einen Abschnitt einer ersten Ausführungsform eines Spendematerials nach der Erfindung mit einer Trennmaterialbahn und auf dieser jeweils mittels einer Kleberschicht aufgeklebten Karten, wobei die Kleberschicht der Karten jeweils lokal modifiziert ist und die Modifikation jeweils durch ein Substrat gebildet wird;
- Fig. 2: eine Vorrichtung zur Herstellung des Spendematerials von Fig. 1;
- Fig. 3: eine Vorrichtung mit einem Etikettenspender zur Verwendung des Spendematerials von Fig. 1 zur Herstellung von Papierbögen mit aufgeklebten Karten;
- Fig. 4: unter a) einen der Papierbögen von Fig. 3 mit aufgeklebter Karte, unter b) den gleichen Papierbogen mit abgelöster Karte, und unter c) die abgelöste Karte zusammengefaltet und mit sich verklebt;
- Fig. 5: unter a) in einer Darstellung gemäss Fig 1 einen Abschnitt einer zweiten Ausführungsform eines Spendematerials nach der Erfindung, wobei die Modifikation der Kleberschicht der Karten durch einen Transponder mit Chip gebildet wird, und unter b) in einer Darstellung gemäs Fig. 4c) eine der Karten zusammengefaltet und mit sich verklebt und unter c) eine zusammengefaltete und mit sich verklebte Karte in einer alternativen Ausführungsform;
- Fig. 6: in einer Darstellung gemäss Fig 1 einen Abschnitt einer dritten Ausführungsform eines Spendematerials nach der Erfindung, wobei die Modifikation der Kleberschicht der Karten durch einen Aufdruck gebildet wird;
- Fig. 7: in einer Darstellung gemäss Fig 1 einen Abschnitt einer vierten Ausführungsform eines Spendematerials nach der Erfindung, wobei die Modifikation der Kleberschicht der Karten durch eine Gravur in der Kleberschicht gebildet wird;

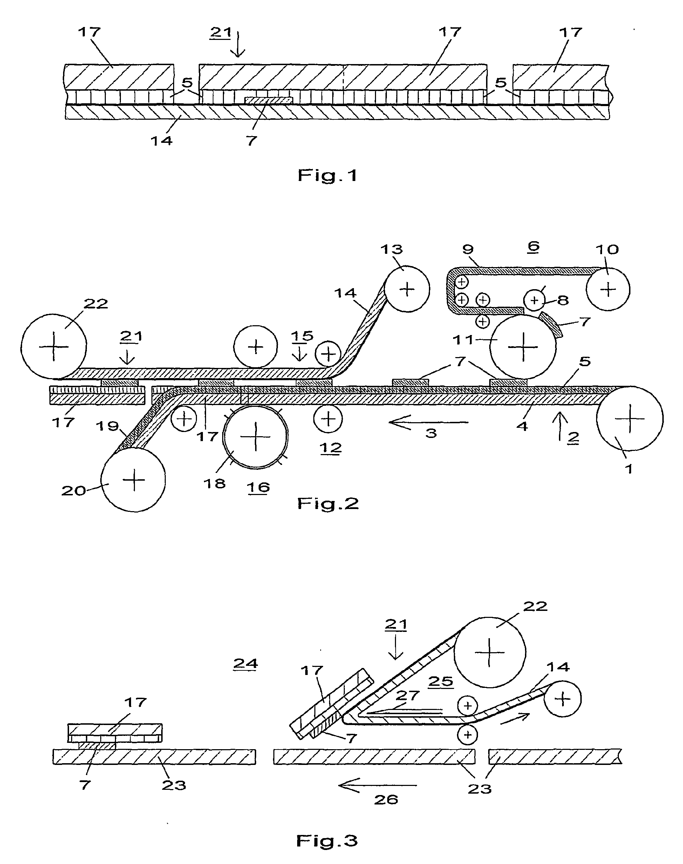

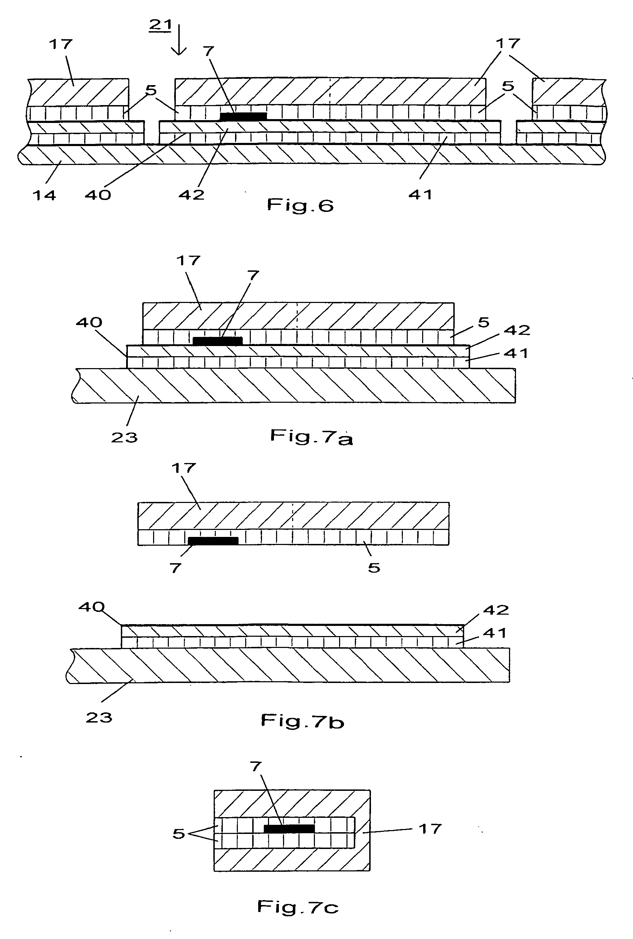

- Fig. 6: in einer Darstellung gemäss Fig. 1 einen Abschnitt einer dritten Ausführungsform der Erfindung, bei welcher die Kleberschicht der Karten permanent klebend eingestellt ist und deswegen zusätzlich jeweils ein Trennmaterialstück unterhalb der Karten vorhanden ist; und

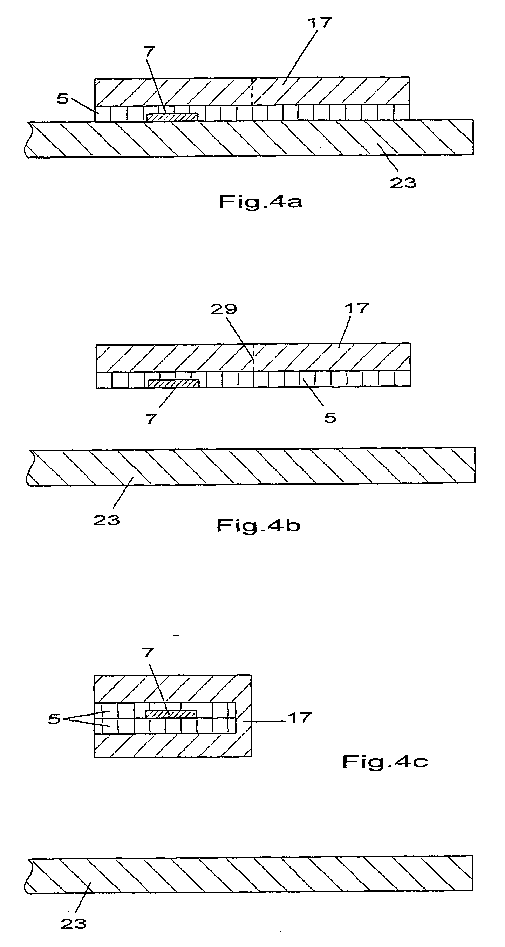

- Fig. 7: in einer Darstellung gemäss Fig. 4 unter a) einen Papierbogen mit aufgeklebter Karte und Trennmaterialstück, unter b) den gleichen Papierbogen mit abgelöster Karte, und unter c) die abgelöste Karte zusammengefaltet und mit sich verklebt.

### WEGE ZUR AUSFÜHRUNG DER ERFINDUNG

Bei dem in Fig. 1 dargestellten Abschnitt eines Spendematerials bzw. einer Spendematerialbahn 21 sind auf einer Trennmaterialbahn 14 diskrete Karten 17 jeweils mittels einer Kleberschicht 5 aufgeklebt. Die Kleberschicht 5 der Karten 17 ist jeweils lokal modifiziert und zwar durch ein Substrat 7.

Bei der Trennmaterialbahn 14 kann es sich um ein Silikonpapier handeln mit einer Trenn- bzw Silikonschicht gegen die Karten 17 hin, so dass diese zusammen mit ihrer Kleberschicht 5 von der Trennmaterialbahn 14 ablösbar sind. Beim Ablösen der Karten 17 gehen die Substrate 7 mit den Karten mit, weil sie an der Kleberschicht 5 der Karten 17 haften, mit der Trennmaterialbahn 14 dagegen keine Verbindung haben.

Mit der Vorrichtung von Fig. 2 bzw. dem von dieser ausgeführten Verfahren kann das Spendematerial von Fig. 1 hergestellt werden. Die Vorrichtung von Fig. 2 ist eine sogenannte Web-Finishing Anlage. Von einer ersten Rolle 1 wird eine Kartenmaterialbahn 2 abgezogen und entlang der Anlage in Richtungs des Pfeiles 3 transportiert. Die Kartenmaterialbahn 2 ist zweilagig und umfasst eine Kartenmaterialschicht 4 und eine Kleberschicht 5. Die Kleberschicht 5 ist so eingestellt, dass die Kartenmaterialbahn 2 auf der Rolle 1 auf sich selbst aufgewickelt sein kann. Die Orientierung der Kartenmaterialbahn 2 ist so gewählt, dass nach dem Abziehen die Kleberschicht 5 an ihrer Oberseite frei liegt.

In einer ersten Bearbeitungsstation 6 werden Substrate 7 auf die Kartenmaterialbahn 2 appliziert. Die Substrate 7 werden hierbei durch Ablängen mittels einer Schneidvorrichtung 8 von einer endlosen Substratbahn 9 gewonnen, die von einer Rolle 10 abgezogen wird. Nach ihrer Vereinzelung werden die Substrate 7 von einem Vakuumzylinder 11 übernommen, auf diesem temporär fixiert und über diesen auch auf die freiliegende Kleberschicht 5 der laufenden Kartenmaterialbahn 2 aufgerollt, auf welcher sie anhaften.

Die derart mit den Substraten 7 versehene Kartenmaterialbahn 2 wird nachfolgend in einer zweiten Bearbeitungsstation 12 mit einer ebenfalls endlosen, von einer Rolle 13 abgezogenen, mit einer Trennbeschichtung versehenen Trennmaterialbahn 14 zusammengeführt und mit dieser zu einer Zwischenbahn 15 laminiert. Die Haftung der beiden Bahnen 2 und 14 aneinander vermittelt die Kleberschicht 5. Wegen der Trennbeschichtung der Trennmaterialbahn 14 ist diese Haftung wieder lösbar.

In einer dritten Bearbeitungsstation 16 werden durch Anstanzen der Zwischenbahn 15 Karten 17 in der Kartenmaterialbahn 2 ausgestanzt. Als Stanzwerkzeug dient ein Stanzzylinder 18, bei welchem es sich um einen Magnetzylinder handeln kann, auf welchem ein dünnes metallisches Stanzblech mit feinen Stanzgraten magnetisch fixiert ist. Das bei dem Stanzen anfallende Stanzgitter wird als Stanzgitterbahn 19 sofort abgezogen und auf einer Rolle 20 aufgerollt. Die Stanzgitterbahn 19 bildet einen Abfall und wird später verworfen. Die zur Stanzgitterbahn 19 komplementäre Bahn 21 bildet die gewünschte Spendematerialbahn und wird schliesslich auf einer Rolle 22 auf sich selbst aufgerollt.

Bei der Vorichtung von Fig. 2 kann es vorteilfhaft oder aus maschinentechnischen Gründen sogar erforderlich sein, die Kartenmaterialbahn 2 vor der zweiten Bearbeitungsstation 12 oder auch die Zwischenbahhn 15 vor der dritten Bearbeitungsstation zu wenden, so dass der Stanzzylinder 18 nach oben zu liegen kommt und auch die Stanzgitterbahn 19 nach oben abgezogen wird. Am grundsätzlichen Ablauf ändert dies jedoch nichts.

Anhand von Fig. 3 wird nunmehr erläutert, wie die Spendematerialbahn 21 zur Herstellung von Papierbögen 23 mit aufgeklebten Karten 17 bevorzugt verwendet wird.
Fig. 3 zeigt eine nicht näher dargestellte Vorrichtung 24 mit einem Etikettenspender 25, in welcher eine Serie von Papierbögen 23 in Richtung des Pfeiles 26 transportiert wird. Anstelle der Einzelbögen 23 könnte auch eine endlose Papierbahn oder eine im ZickZack faltbare Bahn von noch zusammenhängenden Bögen verwendet werden, welche erst später in Einzelbögen 23 unterteilt wird. Dem Etikettenspender 25 wird die Spendematerialbahn 21 zugeführt, die von der Rolle 22 abgezogen wird. Im Etikettenspender 25 wird die Bahn 21 um ein Schwert 27 umgelenkt, wobei sich die Karten 17 von der Trennmaterialbahn 14 ablösen und auf die Papierbögen 23 übergehen, auf welchen sie mit ihrer Kleberschicht 5 anhaften. Die in der Spendematerialbahn 21 integrierten Substrate 7 gehen bei diesem Spendevorgang mit den Karten 17 jeweils mit und werden zwischen den Karten 17 und den Papierbögen 23 jeweils eingebettet, ohne dass hierzu irgenwelche zusätzlichen Massnahmen erforderlich sind.

Fig. 4 zeigt unter a) zunächst einen der Papierbögen 23 mit einer aufgespendeten Karte 17 und einem dabei gleichzeitig eingebrachten Substrat 7. Gemäss einer bevorzugten Ausführungsform der Erfindung ist die Kleberschicht 5 so eingestellt, dass sie einerseits von der Oberfläche des Papierbogens 23 ablösbar ist, andererseits aber an den Karten 17 zumindest fester haftet. Die Karten 17 lassen sich deshalb, wie dies in Fig. 4 unter b) dargestellt ist, von am Papierbogen 23 zerstörungsfrei ablösen, wobei die Kleberschicht 5 vollständig mit den Karten 17 mitgeht und keine Kleberrückstände auf dem Papierbogen zurückbleiben. Indem das Substrat 7 einerseits an der Kleberschicht 5 haftet und andererseits keine Verbindung mit dem Papierbogen 23 hat, geht auch das Substrat der 7 beim Ablösen mit der Karte 17 mit.

Die Karte 17 kann sodann wie eine Selbstklebeetikette z.B. an einem anderen Gegenstand zusammen mit dem Substrat wieder angeklebt werden, wodurch das Substrat durch die Karte 17 dann wieder abgedeckt und geschützt ist. Aus der Karte 17 lässt sich anderseits jedoch auch nach Art einer Faltkarte, wie dies Fig. 4 unter c) zeigt, durch Zusammenfalten und miteinander Verkleben von zwei ihrer Teile mittels der Kleberschicht 5 eine äusserlich nicht klebrige Karte herstellen, in welcher das Substrat eingeschlossen und dadurch ebenfalls wieder geschützt ist. Bei dieser Anwendung ist es meist von Vorteil, wenn die Kleberschicht 5 gegen sich selbst stärker als z.B. gegenüber dem Papierbogen 23 klebend ist. Das Falten kann z.B. durch eine als Perforation ausgebildete Falzhilfe 29 noch erleichtert werden.

Das Substrat 7 kann mit einem Aufdruck oder dergleichen versehen sein. Sofern für das Kartenmaterial eine transparente Folie verwendet ist, ist der Aufdruck oder dergleichen durch diese hindurch ggf. sichtbar. Hierdurch eröffnen sich die unterschiedlichsten Anwendungsmöglichkeiten.

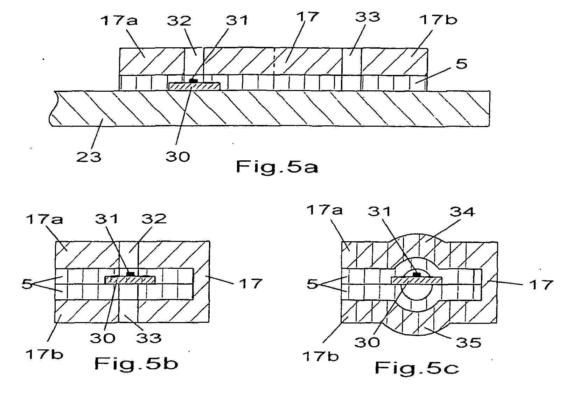

Jedenfalls weist das Substrat einen berührungslos detektierbaren Tag auf, insbesondere einen sogenannten Transponder, d.h. einen mit einem Chip versehenen Tag. Einen Papierbogen 23 mit einer faltbaren Karte 17 und einem solchen Transponder 30 zeigt Fig. 5 unter a).

Unter b) zeigt Fig. 5 die Karte 17 mit dem Transponder 30 zusammengefaltet und mit sich verklebt, wobei der Chip 31 zwischen ihren beiden Hälften 17a und 17b eingeschlossen ist. Um den in der Regel gegenüber den übrigen Schichten etwas auftragenden Chip 31 gegen Beschädigung zu schützen können in der Karte 17 im Bereich des Chips 31 eine oder mehrere Druckenlastungszonen vorgesehen sein, z.B. in Form von Ausstanzungen 32 und/oder 33. Diese Ausstanzungen können durch eine geeignete Ausbildung des erwähnten Stanzbleches auf dem Stanzzylinder 18 in der dritten Bearbeitungsstation 16 der Vorrichtung von Fig. ohne zusätzlich Aufwand direkt mit erzeugt werden. Ggf. ist es dabei weiter von Vorteil, die Druckenlastungsstanzung zur Schonung des Chips 31 nur in der Hälfte 17b der späteren Faltkarte vorzunehmen, in welcher der Chip 31 nicht angeordnet ist. Anstatt durch Ausstanzungen könnte eine Druckentlastung des Chips 31 auch durch Ausbeulungen 34 und/oder 35 des Kartenmaterials erreicht werden, wie dies Fig. 5 unter c) zeigt.

Anders als in den vorbeschriebenen Beispielen kann im Rahmen der Erfindung die Kleberschicht 5 der Karten 17 auch permanent klebend eingestellt sein. Die Karten sind dann, wie dies bei üblichen Selbstklebe-Etiketten meist der Fall ist, von den Gegenständen, an welchen sie allfällig angeklebt werden, nicht mehr so einfach, inbesondere nicht mehr zerstörungsfrei ablösbar. Die Modifikation der Kleberschicht ist in diesem Fall nach einem Ankleben der Karten 17 an einem Gegenstand auch nicht mehr ohne weiteres zugänglich.

Damit sich andererseits bei permanent klebender Einstellung der Kleberschicht 5 die Karten 17 immer noch von den Gegenständen wie z.B. von Papierbögen 23, auf welchen sie allfällig angeklebt werden, wieder ablösen lassen, kann zusätzlich jeweils ein Trennmaterialstück unterhalb der Karten hinzugefügt werden. Fig. 6 zeigt ein solches Spendematerial 21, wobei die Trennmaterialstücke insgesamt mit 40 bezeichnet sind. Die Trennmaterialstücke 40 umfassen eine Permanent-Kleberschicht 41 und eine kartenmaterialseitig mit einer Trennbeschichtung versehene dünne, jedoch tragende Schicht 42.

Die Trennmaterialstücke 40 können ohne zusätzlichen Aufwand dadurch in das Spendematerial 21 eingebracht werden, indem die Trennmaterialbahn 14 einfach um die Kleberschicht 41 und die Schicht 42 der Trennmaterialstücke 40 erweitert und die Trennmaterialstücke 40 durch das in der dritten Bearbeitungsstation 16 eingesetzte Stanzwerkzeug mit ausgestanzt werden.

Damit die anhand von Fig. 3 erläuterte Verarbeitung des Spendematerials von Fig. 6 möglich ist, muss die Haftung der Kleberschicht 5 an der Schicht 42 stärker sein, als die Haftung der Kleberschicht 41 auf der Trennmaterialbahn 14.

Fig. 7 zeigt in einer Darstellung gemäss Fig. 4 unter a) einen Papierbogen 23 mit aufgeklebter Karte 17 und einem Trennmaterialstück 40. Unter b) ist in Fig. 7 die Karte 17 abgelöst und zwar von dem Trennmaterialstück 40, welches auf dem Papierbogen 23 zurückgebleiben ist. Damit das Trennmaterialstück 40 auf dem Papierbogen 23 zurückbleibt, muss die Haftung der Kleberschicht 41 auf dem Papierbogen 23 stärker sein als die Haftung der Kleberschicht 5 auf der Schicht 42. Um die Karte 17 einfacher von dem Trennmaterialstück 40 ablösen zu können, ist dieses mit Vorteil auch etwas grösser als die Karte 17 bemessen.

Unter c) zeigt Fig. 7 schliesslich noch die abgelöste Karte 17 zusammengefaltet und mit sich verklebt.

### BEZEICHNUNGSLISTE

- 1: erste Rolle 1
- 2: Kartenmaterialbahn
- 3: Pfeil
- 4: Kartenmaterialschicht
- 5: Kleberschicht
- 6: erste Bearbeitungsstation
- 7: Substrate
- 8: Schneidvorrichtung
- 9: Substratbahn
- 10: Rolle
- 11: Vakuumzylinder
- 12: zweite Bearbeitungsstation
- 13: Rolle
- 14: Trennmaterialbahn
- 15: Zwischenbahn
- 16: dritte Bearbeitungsstation
- 17: Karten
- 17a: eine Hälfte von 17
- 7b: andere Hälfte von 17
- 18: Stanzzylinder
- 19: Stanzgitterbahn
- 20: Rolle
- 21: komplementäre Bahn
- 22: Rolle
- 23: Papierbögen
- 24: Vorrichtung
- 25: Etikettenspender
- 26: Pfeil
- 27: Schwert
- 30: Transponder
- 31: Chip
- 32/33: Ausstanzungen
- 34/35: Ausbeulungen
- 40: Trennmaterialstücke
- 41: Permanent-Kleberschicht von 40
- 42: tragende Schicht 42 von 40

## Patentansprüche

1. Spendematerial (21) zur Herstellung von Gegenständen mit aufgeklebten Karten (17), weiches Spendematerial (21) eine Trennmaterialbahn (14) und darauf ablösbar aufgeklebt und trennmateriaiseitig mit einer Kleberschicht (5) versehen solche Karten (17) aufweist und wobei die Kleberschicht (5) der Karten (17) mit einer lokalen Modifikation versehen ist, **dadurch gekennzeichnet, dass** die Modifikation der Kleberschicht der Karten (17) durch mindestens ein auf die Kleberschicht (5) lokal aufgebrachtes Substrat (7) gebildet wird, wobei das Substrat (7) einen berührungslos detektierbaren Tag umfasst.

2. Spendematerial (21) nach Anspruch 1, **dadurch gekennzeichnet, dass** das Substrat (7) geeignet ist, eine Information zu vermitteln.

3. Spendematerial (21) nach einem der Ansprüche 1 - 2, **dadurch gekennzeichnet, dass** die Karten (17) intransparent sind.

4. Spendematerial (21) nach einem der Ansprüche 1 - 3, **dadurch gekennzeichnet, dass** der berührungslos detektierbare Tag ein sogenannter Transponder ist.

5. Spendematerial (21) nach einem der Ansprüche 1-4, **dadurch** gekennnzeichnet, dass die Kleberschicht (5) der Karten (17) nicht-permanent klebend ausgebildet ist, so dass die Karten (17) nach Ablösung von der Trennmaterialbahn (14) insbesondere an einer Papieroberfläche wiederablösbar anklebbar sind.

6. Spendematerial (21) nach Anspruch 5, **dadurch gekennzeichnet, dass** die Karten (17) als Faltkarten ausgebildet sind und vorzugsweise eine durch eine Stanzung erzeugte Falthilfe aufweisen.

7. Spendematerial (21) nach den Ansprüchen 4 und 6, **dadurch gekennzeichnet, dass** die Faltkarte mit einer Druckentlastungszone für einen Chip des Transponders vorgesehen ist.

8. Spendematerial (21) nach einem der Ansprüche 1 - 4, **dadurch gekennzeichnet, dass** die Kleberschicht (5) der Karten (17) permanent klebend ausgebildet ist, so dass die Karten (17) nach Ablösung von der Trennmaterialbahn (14) insbesondere an einer Papieroberfläche zerstörungsfrei nicht wieder ablösbar anklebbar sind.

9. Spendematerial (21) nach Anspruch 8, **dadurch gekennzeichnet, dass** zwischen der Kleberschicht (5) der Karten (17) und der Trennmaterialbahn (14) jeweils ein Trennmaterialstück mit einer Trennschicht zur Kleberschicht der Karten (17) hin und einer weiteren Kleberschicht zur Trennmaterialbahn (14) hin vorhanden ist, wobei der Trennwert zwischen der weiteren Kleberschicht und der Trennmaterialbahn schwächer eingestellt ist als der Trennwert zwischen der Kleberschicht der Karten (17) und der Trennschicht des Trennmaterialstücks.

10. Spendematerial nach Anspruch 9, **dadurch gekennzeichnet, dass** die Trennmaterialstücke die Karten (17) flächenmässig jeweils wenigstens teilweise überragen.

11. Verfahren zur Herstellung eines Spendematerials (21) nach einem der Ansprüche 1 - 10 mit einer Trennmaterialbahn (14) und darauf ablösbar aufgeklebten, trennmaterialseitig mit einer Kleberschicht (5) versehenen Karten (17), wobei die Kleberschicht (5) der Karten (17) mit einer lokalen Modifikation versehen ist, **dadurch gekennzeichnet, dass** in einem Durchlauf eine Kartenmaterialbahn, die eine Kartenmaterialschicht und eine freiliegende Kleberschicht umfasst, mit der Trennmaterialbahn (14) zu einer Zwischenbahn laminiert wird, die lokale Modifikation der Kleberschicht (5) der Karten (17) durch eine lokale Modifikation der freiliegenden Kleberschicht der Kartenmaterialbahn vor dem Laminieren mit der Trennmaterialbahn durch lokales Aufbringen von berührungslos detektierbare Tags umfassenden Substraten (7) ausgeführt wird, und dass die Karten (17) nach dem Laminieren durch Stanzen der Zwischenbahn in der Kartenmaterialbahn erzeugt werden.

12. Verfahren nach Anspruch 11, **dadurch gekennzeichnet, dass** die Substrate (7) durch Ablängen einer nicht klebenden Substratbahn vereinzelt und vorzugsweise mittels eines Vakuumzylinders auf die freiliegende Kleberschicht der Kartenmaterialbahn aufgebracht werden.

13. Verfahren nach einem der Ansprüche 11 -12, **dadurch gekennzeichnet, dass** die Kleberschicht der Kartenmaterialbahn nicht-permanent klebend ausgebildet ist und dass die Kartenmaterialbahn (2) von einer Rolle abgewickelt wird, auf welcher sie ohne zusätzliche Abdeckung der Kleberschicht auf sich selbst aufgerollt ist.

14. Verfahren nach einem der Ansprüche 11 - 12, **dadurch gekennzeichnet, dass** die Kleberschicht der Kartenmaterialbahn permanent klebend ausgebildet ist und dass die Trennmaterialbahn (14) auf ihrer der Kartenmaterialbahn zugewandten Seite mittels einer weiteren Kleberschicht mit einer weiteren Trennmaterialbahn (14) laminiert ist, welche weiteren Schichten in die Zwischenbahn mit eingehen und aus welchen beim Stanzen der Zwischenbahn zur Erzeugung der Karten Trennmaterialstücke mit ausgestanzt werden.

15. Verfahren nach einem der Ansprüche 11 - 14, **dadurch gekennzeichnet, dass** ein beim Stanzen der Zwischenbahn (15) entstehendes Stanzgitter unmittelbar abgezogen wird.

16. Verfahren nach einem der Ansprüche 11 - 15 zur Herstellung eines Spendematerials (21) mit Substraten (7), welche einen Transponder mit Chip aufweisen, **dadurch gekennzeichnet, dass** beim Stanzen der Zwischenbahn in der Kartenmaterialschicht jeweils mindestens eine Druckentlastungszone für den Transponderchip mit erzeugt wird.

17. Verwendung eines Spendematerials (21) nach einem der Ansprüche 1 - 10 in Verbindung mit einem Etikettenspender zur Herstellung von Gegenständen mit aufgeklebter Karte (17).

18. Verwendung nach Anspruch 17, **dadurch gekennzeichnet, dass** als Gegenstände Papierbögen (23), zum Zeitpunkt des Aufspendens entweder zusammenhängend in Form einer Papierbahn oder in Form von Einzelbögen, verwendet werden.

## Claims

1. A dispenser material (21) for the production of objects with stuck cards (17), said dispenser material (21) comprising a separable web (14) and such cards (17) being removably stuck on said separable web and provided with a web-sided adhesive layer (5) and whereby the adhesive layer (5) of the cards (17) is provided with a local modification, **characterized in that** the modification of the adhesive layer of the cards (17) is formed by at least one substrate (7), applied locally on the adhesive layer (5), whereby the substrate (7) comprises a tag, which can be detected in a contact-free manner.

2. The dispenser material (21) according to claim 1, **characterized in that** the substrate (7) is suitable for providing information.

3. The dispenser material (21) according to one of claims 1-2, **characterized in that** the cards (17) are transparent.

4. The dispenser material (21) according to one of claims 1-3, **characterized in that** the tag, which can be detected in a contact-free manner, is a so-called transponder.

5. The dispenser material (21) according to one of claims 1-4, **characterized in that** the adhesive layer (5) of the cards (17) is embodied in a non-permanently adhesive manner so that, after removal from the separable web (14), the cards (17) can be stuck on a paper surface, in particular, so as to be capable of being detached again.

6. The dispenser material (21) according to claim 5, **characterized in that** the cards (17) are embodied as folding cards and comprise a folding aid, preferably generated by means of stamping.

7. The dispenser material (21) according to claims 4 and 6, **characterized in that** the folding card is provided with a pressure release zone for a chip of the transponder.

8. The dispenser material (21) according to one of claims 1-4, **characterized in that** the adhesive layer (5) of the cards (17) is embodied in a permanently adhesive manner so that, after removal from the separable web (14), the cards (17) cannot be removably stuck on a paper surface, in particular, without being destroyed.

9. The dispenser material (21) according to claim 8, **characterized in that** between the adhesive layer (5) of the cards (17) and the separable web (14) a respective separable material piece with a separable layer is present in the direction of the cards (17) and a further adhesive layer is present in the direction of the separable web (14), whereby the separation force value between the further adhesive layer and the separable web is set to be less than the separation force value between the adhesive layer of the cards (17) and the separation force value of the separable web piece.

10. The dispenser material according to claim 9, **characterized in that** the separable web pieces at least partially protrude the area of the cards (17).

11. A method for producing a dispenser material (21) according to one of claims 1-10 with a separable web (14) and cards (17) being removably stuck on said separable web and provided with a web-sided adhesive layer (5), whereby the adhesive layer (5) of the cards (17) is provided with a local modification, **characterized in that** during a passage, a card material web comprising a card material layer and an exposed adhesive layer is laminated with the separable web (14) to form an intermediate web, the local modification of the adhesive layer (5) of the cards (17) being carried out by a local modification of the exposed adhesive layer of the card web prior to lamination with the separable web by local application of substrates (7) comprising tags, which can be detected in a contact-free manner, and **in that** the cards (17) are produced after lamination by punching of the intermediate web in the card material web.

12. The method according to claim 11, **characterized in that** the substrates (7) are applied on the exposed adhesive layer of the card material web by cutting a non-adhesive substrate web individually and, preferably, by means of a vacuum cylinder.

13. The method according to one of claims 11-12, **characterized in that** the adhesive layer of the card material web is embodied in a non-permanently adhesive manner and **in that** the card material web (2) is unwound from a roll, on which it is wound on itself without additional covering of the adhesive layer.

14. The method according to one of claims 11-12, **characterized in that** the adhesive layer of the card material web is embodied in a permanently adhesive manner and **in that**, on its side facing towards the card material web, the separable web (14) is laminated by means of a further adhesive layer with a further separable web, said further layers being included into the intermediate web and from which separable material pieces are punched out in response to the punching of the intermediate web for creating the cards.

15. The method according to one of claims 11-14, **characterized in that** a punched grid created in response to punching of the intermediate web (15) is immediately removed.

16. The method according to one of claims 11-15 for producing a dispenser material (21) with substrates (7) comprising a transponder with a chip, **characterized in that**, in response to punching the intermediate web at least one respective pressure release zone is generated for the transponder chip in the card material layer.

17. A use of a dispenser material (21) according to one of claims 1-10 in connection with a label dispenser for producing objects with a bonded card (17).

18. The use according to claim 17, **characterized in that**, at the time of dispensing, sheets of paper (23) are used either continuously in the form of a paper web or in the form of individual sheets.

## Revendications

1. Matériau de distribution (21) servant à produire des objets comportant des cartes collées (17), ce matériau de distribution (21) comportant une bande (14) en matériau de séparation et de telles cartes (17) collées sur celle-ci, de façon détachable avec une couche de colle (5) prévue sur le côté du matériau de séparation, et dans lequel la couche de colle (5) des cartes (17) comporte une modification locale, **caractérisé en ce que** la modification de la couche de colle des cartes (17) est réalisée au moins par un substrat (7) appliqué localement sur la couche de colle (5), le substrat (7) étant constitué par une étiquette détectable sans contact.

2. Matériau de distribution selon la revendication 1, **caractérisé en ce que** le substrat (7) est adapté pour communiquer une information.

3. Matériau de distribution (21) selon l'une des revendications 1 ou 2, **caractérisé en ce que** les cartes (17) sont non-transparentes.

4. Matériau de distribution (21) selon l'une des revendications 1 à 3, **caractérisé en ce que** l'étiquette détectable sans contact est un transpondeur.

5. Matériau de distribution (21) selon l'une des revendications 1 à 4, **caractérisé en ce que** la couche de colle (5) des cartes (17) est réalisée pour un collage non permanent, de sorte qu'après enlèvement des cartes (17) de la bande en matériau de séparation (14), celles-ci puisse être collées de nouveau, notamment de façon détachable, sur une surface de papier.

6. Matériau de distribution (21) selon la revendication 5, **caractérisé en ce que** les cartes (17) sont réalisées sous forme de cartes pliées et présentent de préférence un pli préformé obtenu par un estampage.

7. Matériau de distribution (21) selon les revendications 4 et 6, **caractérisé en ce que** la carte pliée présente une zone déchargée de pression pour la puce du transpondeur.

8. Matériau de distribution (21) selon l'une des revendications 1 à 4, **caractérisé en ce que** la couche de colle (5) des cartes (17) est réalisée pour un collage permanent, de sorte qu'après enlèvement des cartes (17) de la bande en matériau de séparation (14), celles-ci ne peuvent pas être collées de nouveau de façon détachable sans détérioration, notamment sur une surface de papier.

9. Matériau de distribution (21) selon la revendication 8, **caractérisé en ce qu'**entre la couche de colle (5) des cartes (17) et la bande de matériau de séparation (14) est prévue chaque fois une pièce de matériau de séparation avec une couche de séparation vers la couche de collage des cartes (17), et une couche supplémentaire de collage vers la bande de matériau de séparation (14), la valeur de séparation entre la couche supplémentaire de colle et la bande de matériau de séparation étant réglée plus faible que la valeur de séparation entre la couche de colle des cartes (17) et la couche de séparation de la pièce de matériau de séparation.

10. Matériau de distribution (21) selon la revendication 9, **caractérisé en ce que** les pièces de matériau de séparation font chacune, au moins en partie, saillie en surface.

11. Procédé pour produire un matériau de distribution (21) selon l'une des revendications 1 à 10, comportant une bande (14) en matériau de séparation et de telles cartes (17) collées sur celles-ci de façon détachable avec une couche de colle (5) prévue sur le côté du matériau de séparation, et dans lequel la couche de colle (5) des cartes (17) comporte une modification locale, **caractérisé en ce que**, lors d'un parcours d'une bande de matériau de cartes qui comporte une couche de matériau de cartes et une couche libre de colle, qui est laminée avec la bande de matériau de séparation (14) en une bande intermédiaire, la modification locale de la couche de colle (5) des cartes (17) est réalisée par une modification locale de la couche de colle libre de la bande de matériau de cartes avant le laminage avec la bande de matériau de séparation par application locale d'étiquettes détectables sans contact constituant les substrats (7), et **en ce que** les cartes (17) sont obtenues après laminage par estampage de la bande intermédiaire dans la bande de matériau de cartes.

12. Procédé selon la revendication 11, **caractérisé en ce que** les substrats (7) sont découpés en pièces unitaires dans une bande non collante de substrats et sont appliqués sur la couche de colle libre de la bande de matériau de cartes, de préférence avec un cylindre sous vide.

13. Procédé selon l'une des revendications 11 ou 12, **caractérisé en ce que** la couche de colle de la bande de matériau de cartes est réalisée pour ne pas être collante en permanence, et **en ce que** la bande de matériau de cartes (2) est dévidée d'un rouleau sur lequel cette bande est enroulée elle-même sans revêtement supplémentaire de la couche de colle.

14. Procédé selon l'une des revendications 11 ou 12, **caractérisé en ce que** la couche de colle de la bande de matériau de cartes est réalisée pour être collante en permanence, et **en ce que** la bande de matériau de séparation (14) est laminée sur sa face adjacente à la bande de matériau de cartes avec une couche de colle supplémentaire avec une bande de matériau de séparation supplémentaire (14), ces couches supplémentaires étant introduites dans la bande intermédiaire, et à partir desquelles, lors de l'estampage de la bande intermédiaire pour obtenir des cartes, des pièces de matériau de séparation sont estampées en même temps.

15. Procédé selon l'une des revendications 11 à 14 **caractérisé en ce que**, lors de l'estampage de la bande intermédiaire (15), la grille estampée obtenue est directement retirée.

16. Procédé selon l'une des revendications 11 à 15, pour l'obtention d'un matériau de distribution (21) ayant des substrats (7) qui présentent un transpondeur à puce, **caractérisé en ce que**, lors de l'estampage de la bande intermédiaire dans la couche de matériau de cartes, on obtient chaque fois au moins une zone dépourvue de pression pour le chip du transpondeur.

17. Utilisation d'un matériau de distribution (21) selon l'une de revendications 1 à 10 en relation avec un distributeur d'étiquettes pour l'obtention d'objets comportant des cartes collées (17).

18. Utilisation selon la revendication 17, **caractérisée en ce qu'**on utilise en tant qu'objets des feuilles de papier (23) au moment de la distribution, soit liées les unes aux autres sous forme d'une bande de papier, soit sous forme de feuilles individuelles.
